# EUROPEAN PATENT SPECIFICATION

(11) **EP 0 901 730 B1**
(45) Date of publication and mention of the grant of the patent: **19.10.2005**
(21) Application number: 97902390.0
(22) Date of filing: 07.02.1997
(51) Int. Cl.: H04M 3/58, H04M 3/54, H04Q 3/00

(54) **METHOD TO RE-ROUTE A CALL**
VERFAHREN ZUR RUF-UMWEGLENKUNG
PROCEDE DE REACHEMINEMENT D'UNE COMMUNICATION

(30) Priority: 19.02.1996 FI 960745
(43) Date of publication of application: 17.03.1999
(73) Proprietor: TeliaSonera Finland Oyj, 00510 Helsinki (FI)
(72) Inventor: ÄRMÄNEN, Matti, FIN-02601 Espoo (FI)
(74) Representative: Simmelvuo, Markku Kalevi
(86) International application number: PCT/FI1997/000076
(87) International publication number: WO 1997/030541

(56) References cited:
- EP-A- 0 740 480
- US-A- 5 369 695
- US-A- 5 425 090
- US-A- 5 432 845
- US-A- 5 459 779

## Description

The invention relates to a method in accordance with the preamble of the claim 1 to re-route a call based on information given by subscriber.

There is previously known a method to re-route a call based on information given by called subscriber, in which method called subscriber effects call forwarding in advance from his own terminal by giving to the telephone exchange information about forwarding calls and the new number to which incoming calls to the called subscriber should be connected there after.

As a problem in the known call forwarding method described above is that the call forwarding instructions should be given before incoming calls to the called subscriber. In case it becoms a need of forwarding a call to a new number or service, this cannot be done.

Previously there is known a number inquiry service, in which the caller asks to be connected to the number he is inquiring about. In this case a new call is made to the public telephone network via an outgoing line.

As a problem with the number inquiry services is that calling subscriber for the new outgoing call is, however, the telephone exchange or exchange of the telecommunications operator providing the number inquiry service, hence the call cannot be connected to chargeable service numbers such the calling subscriber would pay the chargeable call. Nor is the number of the original calling subscriber available when managing or identifying the re-routed call.

US 5369695 discloses a method for redirecting a call to an alternate destination in a communications network in the event that the call is not answered within a predetermined period of time. Redirection after answering the call is also possible. However, by applying said method calling subscriber does not remain as the original calling party throughout the call.

US 5432845 discloses a system for post answer telephone call redirection in such a way that the calling subscriber remains as the original calling party. The call is re-routed based on the information given by the called subscriber to a redirected subscriber. After the called subscriber has activated the re-routing procedure, the connection between the calling subscriber and the called subscriber is cleared. However, said system is primarily designed for redirecting calls that are toll free for the calling subscriber. In other words, it is mainly concerned with managing call billing in such a way that the called subscriber will pay for the first part of the call and the redirected subscriber for the rerouted second part. This is, however, not reliable, fast enough, and effective solution for re-routing calls.

The object of the invention is to offer telecommunications network users a new method of re-routing a call on the basis of information given by a called subscriber. The characterizing features, which are essential to the method according to the invention, are disclosed in the characterizing part of the claim 1.

The invention concerns a method to re-route a call on the basis of information given by a called subscriber (B1). This method is applied in a communications network, especially in a telecommunications network, comprising an intelligent network (IN), via which calling subscriber's (A) call is first routed, based on the number dialed, to a service switching and control centre of the intelligent network, where the offered service is identified based on the number, and there after call management is assigned to the service controller to further route the call to called subscriber (B1) corresponding to the service number, based on the information given by whom the call is routed further to the next subscriber. According to the invention, the following method steps to re-route a call are effected by the service controller and the call switching device connected thereto:
- calling subscriber's (A) call is firstly connected to a calledsubscriber (B1), whose answer is detected, and where after is waited, that called subscriber's a telephone or a corresponding terminal is hung up;
- the hung-up of the called subscriber's (B1) telephone is detected, where after is waited until the same is answered again;
- the answering again to the called subscriber's (B1) telephone is detected and via the called subscriber's (B1) telephone is given a redirected subscriber's (B2) number, which is registered;
- the connection between the calling subscriber (A) and the called subscriber (B1) is cleared and a new connection between the calling subscriber (A) and the redirected subscriber (B2) is opened; *characterized* in, that
- hunging up, re-answering of the called subscriber's (B1) line and giving of the redirected subscriber's (B2) number N2 are effected automatically by means of an ancillary device (24) connected to the called subscriber's (4) telephone or a corresponding terminal.
As an advantage of the method according to the invention is that it enables to re-route a call, if the called subscriber (B1) meets a need to direct the call to another number. As an advantage is especially that the calling subscriber (A) pays normally for the call if the call is re-routed to a special rated service number. In previously known applications this kind of re-routing a special rated call has not been possible. Yet another advantage of the invention is that by means of the solution according to the method any information about the forwarding need and new number is received quickly and reliably.

The following describes the invention in detail with reference to the diagrams enclosed where
Figure 1 shows in a form of a block diagram equipment and systems related to re-routing a telephone call; and
Figure 2 shows in a form of a flowchart method steps to re-route a call based on information given by the called subscriber (B1);
Figure 3 shows the equipment and systems related to another call re-routing in a form of a block diagram; and
Figure 4 shows in a form of a flowchart method steps to re-route a call when the called subscriber (B1) is at an extension of a telephone exchange and when an ancillary equipment is used.

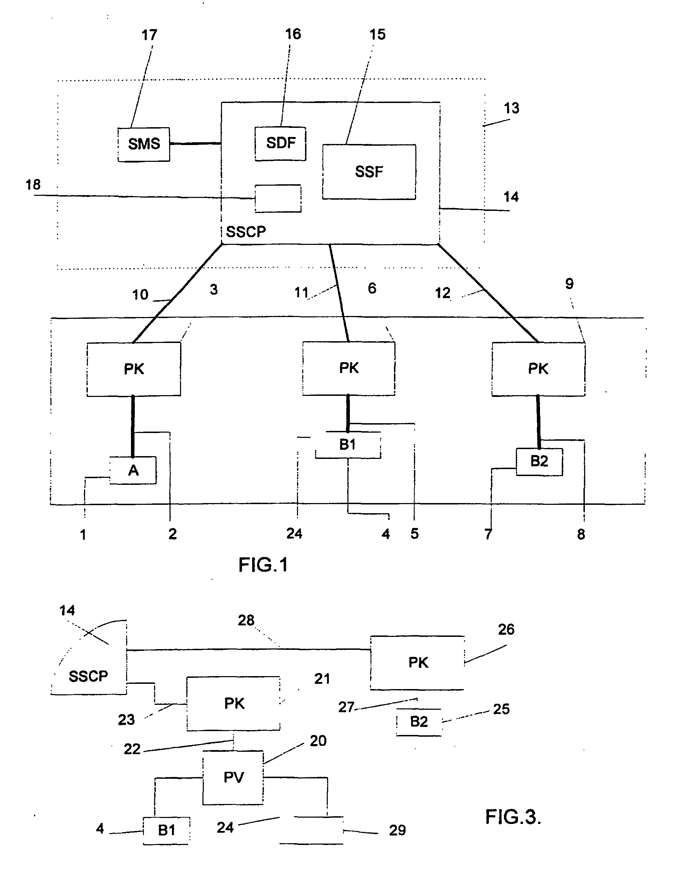

Calling subscriber 1 (A), who has a compatible terminal, such as a telephone fitted with tone frequency dial signaling (DTMF signaling / structural definitions of the telephone networks of Finland) or an impulse dialing phone, has been connected by subscriber cable 2 to a subscriber interface in the local exchange (PK) 3. Similarly another or the called subscriber (B1) 4 and a third subscriber or the redirected subscriber (B2) 7, both of whom have their own terminals provided with tone frequency dial signaling or the like are connected by subscriber cables 5, 8 to a subscriber interface of a second and third local exchange (PK) 6 and 9 respectively. Local exchanges 3, 6 and 9 in this case are part of public telephone network PSTN (Public Switched Telecommunications Network). These local exchanges 3, 6 and 9 are connected by gateways 10, 11 and 12 (either directly as shown in figure 1, or hierarchically via one or more higher exchanges) to intelligent network 13 (Intelligent Network IN) especially to a service switching and control centre (Service Switching and Control Point SSCP) 14. The local exchanges 3, 6 and 9 are connected to the a service switching and control centre, for instance, by means of TUP protocol (the TUP protocol is described in the document "Kansallinen Yhteiskanavamerkinantojärjestelmä, Puhelir käyttSijäosa TUP, Posti- ja telehallitus, Puhelinlaitostenliitto-r.y., Helsinki 1988").

An intelligent network IN is a communications and telecommunications network intended to implement new telecommunications services and to make them available to customers. CCITT (International Telegraph and Telephone Consultative Committee) has defined the conceptual model of an intelligent network, its physical components, functional units and interfaces. The functions required by telecom services have been concentrated into special intelligent network components through which all connections relating to services are dealt with.

An intelligent network IN includes physical components and related functional units in accordance with CCITT's definition: a service switching centre (Service Switching Point SSP), a service control centre (Service Control Point SCP), a service management arrangement (Service Management System SMS) and possibly an intelligent peripheral device or peripheral computer (Intelligent Peripheral). In addition to the components listed, the intelligent network may also include other components. With respect to the intelligent network structure and function, we refer to, for example, report 2. "The Third Summer School on Telecommunications IFIP TC 6 Workshop on Intelligent Networks, August 8-9, 1994; Tutorial on Intelligent Networks", by the Department of Information Technology at Lappeenranta University of Technology.

The intelligent network IN is connected via the service switching centre SSP to public telephone network or to a corresponding communications network, such as to local exchanges 3, 6 and 9 of a telephone network as disclosed in the drawing. In the service switching centre SSP is identified any intelligent network service required by the customer, in other words the need for a service linked to an intelligent network IN, and the request is messaged to the other components of the intelligent network, such as to the service control centre SCP. In the service control centre SCP are located among other things a service controller (Service Switching Function SSF) and a set of call control functions (Call Control Function CCF, Call Control Agent Function CCAF). The intelligent network includes a service management system SMS, which includes service control and generation functions. The service control centre SCP includes the logic or service controller SCF relating to service control. By means of it any implementation of an intelligent network service is managed by giving instructions to other functions (such as among other things SSF, CCF, special resources including function or Special Resource Function SRF) in the manner required by the service. The service control centre SCP normally includes also a service database SDF (Service Data Function), which includes among other things necessary customer and service information needed for the services. The service switching centre SSP and the service control centre SCP can also be combined to form a service switching and control centre (Service Switching and Control Point SSCP) 14, as disclosed in the application in figure 1.

In the drawing are disclosed some of the hardware associated with the intelligent network 13. In practice, service switching and control centre 14 functions as part of a telephone exchange such as a node centre or directory area centre. Service switching and control centre 14 identifies the need for a service (a call to a premium rate number) in the intelligent network 13 from a subscriber connection in any telecommunications network and transmits the request for this need to other components in the intelligent network. The components in the intelligent network are in contact with each other by joint bus signaling (YKM) and the intelligent network protocol (manufacturer specific).

In the system applied in this invention, service switching and control centre 14 includes a service controller 15, by means of which is performed a call re-routing to the redirected subscriber (B2) based on information provided by the called subscriber (B1). The re-routing system belonging to the service controller 15 is preferably implemented by a software controlled service logic in a control computer of the intelligent network 13.

A list of services and service numbers thereof are arranged in the service database 16. To this list are also collected the information about service providers' connection data, such as telephone numbers. The service database 16 and service arrangements belonging to the service controller 15, especially in this embodiment the call re-routing arrangement, are set up and maintained by means of the service management system 17.

In this application the service switching and control centre 14 also includes a tone dialing receiver 18 which can be used to receive tone frequency dial signals (DTMF signaling). The called subscriber's (B1) terminal 4, such as a telephone, is fitted with a known as such numeric keypad and audio frequency key signaling transmission unit.

In this application there is, in connection with the called subscriber (B1), ancillary device 24 such as a combination of a dialing device and computer, which can be used to hang-up and re-answer the called subscriber's (B1) line 5 and to give the redirected subscriber's (B2) number automatically.

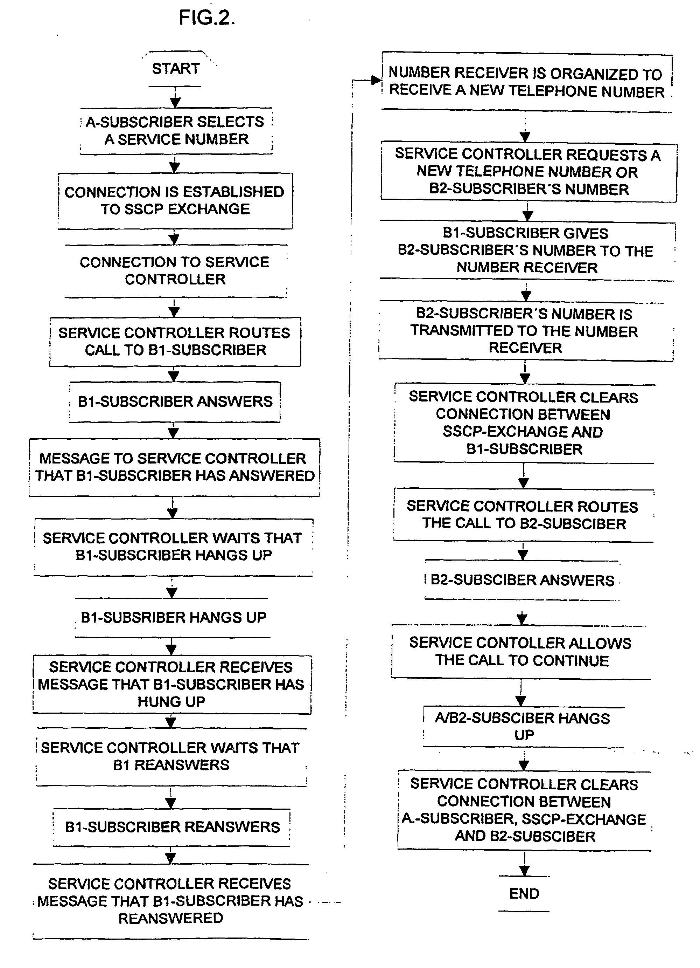

The method used in the invention to re-route a call on the basis of information provided by the called subscriber (B1) is affected in the equipment shown as per the block diagram in figure 1 as follows. The method is shown step by step in the flowchart in figure 2. When a customer, in other words the calling subscriber (A) calls a service number N1, the local exchange 3 connects the call to intelligent network 13. In other words, the calling subscriber (A) does not call directly to the called subscriber's (B1) number, but to a service number N1, by means of which the call is directed to intelligent network 13. The call is arranged to be identified as a service call in the local exchange 3 on the basis of the service number N1 and to be further routed from the local exchange 3 to the service switching and control centre 14 of the intelligent network 13. The service call is identified in the intelligent network 13. The service call is checked basing to the service number N1 in service switching and control centre 14 of the call and the service is identified. Checking utilizes service database 16, where from service data, especially the actual telephone number, are searched basing to the service N1. After this call management is assigned to service controller 15. Controlled by the service controller 15, the calling subscriber's (A) call is routed on the basis of the actual telephone number via the local exchange 6 to the called subscriber (B1) 4. The ancillary device 24 connected to called subscriber (B1) 4 is arranged to answer a transferred call automatically. The service controller 15 registers the answer and waits that the ancillary device 24 clears the call and re-answers the line to automatically give the redirected subscriber's (B2) 7 telephone number to the service controller 15 expediently using voice frequency dialing signals. The call is on between the calling subscriber (A) and the called subscriber (B1) under control of the service controller 15.

When the called subscriber (B1) needs to forward the incoming call from the calling subscriber (A) to another subscriber, in other words to the redirected subscriber (B2), this is effected as follows. The ancillary device 24 connected to called subscriber (B1) 4 is arranged to answer a transferred call.automatically. Service controller 15 arranges to wait until the ancillary device 24 has hung up the transferred call. When the ancillary device has cleared line 5, service controller 15 receives a message to this effect. This message is sent from the local exchange 6 to the service switching and control centre 14 and on to service controller 15 in the form of a message "the called subscriber (B1) has hung up (Clear back, CBK)." Service controller 15 waits for the ancillary device 24 connected to the called subscriber (B1) to answer again. At the same time, calling subscriber (A) is still connected to service controller 15 in the intelligent network 13. When the ancillary device 24 re-answers the line 5 again, in other words answers the telephone again, local exchange 6, which is arranged to notice this and to send a message from the local exchange 6 to the service switching and control centre 14: "the called subscriber (B1) answers, Answer Unqualified, ANU". In the service switching and control centre 14 the information about the called subscriber (B1) having answered the telephone again is forwarded to service controller 15. The service controller 15 directs the tone dialing receiver 18 to receive audio frequency signals from the called subscriber (B1) and to give the called subscriber (B1) message requesting the new telephone number N2, in other words the redirected subscriber's (B2) telephone number. The called subscriber's (B1) telephone or corresponding terminal is arranged to give the redirected subscriber's (B2) number N2 to where it is wanted to transfer the call again. The called subscriber's (B1) telephone or corresponding terminal is arranged to give the redirected subscriber's (B2) number N2 as voice frequency dialing signals. A preset finish sign, such as #, is added to the end of the given telephone number. The redirected subscriber's (B2) number N2 is transmitted to the service controller 15 from voice frequency dialing receiver 18. The service controller 15 clears the connection between the service switching and control centre 14 and the called subscriber (B1) by sending the message "Clearing, Clear-Forward, CLF". This message is received in local exchange 6, whose connection to the called subscriber (B1) is cleared. At the same time, using the functions shown above, the calling subscriber's (A) connection with the service switching and control centre 14 in the intelligent network 13 is maintained. Using the service controller 15, the call is re-routed from the service switching and control centre 14 to the redirected subscriber's (B2) 7 number N2 via local exchange 9. The redirected subscriber's (B2) telephone rings and the redirected subscriber (B2) answers; the speech path between the calling subscriber (A) and the redirected subscriber (B2) is connected via the service switching and control centre 14. Service controller 15 transfers to control status and the call between calling subscriber (A) and redirected subscriber (B2) is allowed to continue. When calling subscriber (A) or redirected subscriber (B2) has hung up, the service controller (15) is arranged to clear the connection between calling subscriber (A), the service switching and control center 14 and redirected subscriber (B2). After this, the calling subscriber (A) is ready to dial a new number or to receive calls.

It is also possible to arrange it so that the ancillary device 24 connected to the called subscriber (B1) makes the telephone transfer when effecting the redirected subscriber's (B2) number as an abbreviated dialing number. In this case, the service controller 15 is arranged to implement a suitable number conversion, in other words to identify the abbreviated dialing number and to dial from the memory function, such as the redirected subscriber's (B2) real number N2, to which the call is connected when call forwarding is implemented as described above, from SDF 16 and from the matrix arranged for it. An advantage with this is that re-routing can then be limited to just certain numbers and thus expedite forwarding.

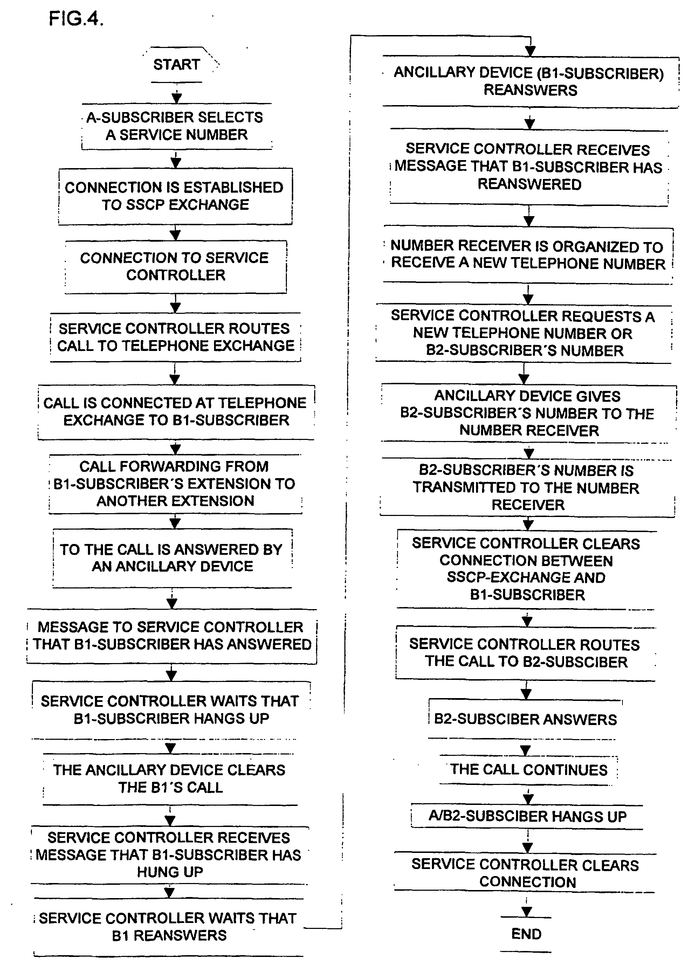

The method in the invention can also be applied in the hardware as shown in the block chart figure 3. In this case the called subscriber (B1) 4 is an extension number in a telephone exchange 20. The telephone exchange 20 is connected to local exchange 21 by subscriber cable 22, and local exchange 21 to the service switching and control centre 14 in the intelligent network by bus 23. The redirected subscriber (B2) 25 is connected to local exchange 26 by subscriber cable 27 and to the service switching and control centre 14 in the intelligent network by gateway 28. Calling subscriber (A), which is not drawn in figure 3, is connected to the service switching and control centre 14 in the intelligent network in the same way as shown in figure 1.

When the redirected subscriber (B2) is an extension number in telephone exchange 20, the call is transferred to the redirected subscriber (B2), which is a subscriber line 28 in a third local exchange such as local exchange 26, in the same way as described above: the only difference being that the messages are sent to and from local exchange 21 to the called subscriber (B1) 4 via telephone exchange 20.

In another application, the telephone exchange 20, to which the called subscriber (B1) 4 is connected, there is, in connection with another extension 29, ancillary device 24 such as a combination of dialing device and computer, which can be used to clear and reopen the calledsubscriber's line 22 and to give the redirected subscriber's number automatically.

Automatic re-routing in the application described above is effected as follows. We refer to the flowchart in figure 4. When the calling subscriber (A) 1 calls the called subscriber (B1), the call is routed, as explained in figure 1, but via the telephone exchange 20 (figure 3). Calling subscriber (A) dials premium rate number N 1, on the basis of which a connection is formed to the service switching and control centre 14 in the intelligent network 13. The service controller 15 effects the number conversion and routes the call to the called subscriber's (B1) extension 4 in telephone exchange 20. The called subscriber (B1) has transferred the call to another extension 29. The call is forwarded automatically as a preset function by a computer controlling telephone exchange 20. The other extension number 29 includes an ancillary device 24 such as a dialing device and computer. In this case, for instance, a modem controlled by computer is connected to the other extension 29. The ancillary device 24 in the other extension 29 is arranged to answer a transferred call automatically, after which ancillary device 24 clears the call and reanswers the line to automatically give the redirected subscriber's (B2) 25 telephone number to the service controller 15 expediently using voice frequency dialing signals.

When the called subscriber's (B1) call has been answered by ancillary device 24, this is noticed and messaged to the service controller 15 just as in the application in figure 1 earlier. After this, the service controller 15 waits for the called subscriber (B1) to hang up. The called subscriber's (B1) call is cleared (the called subscriber (B1) hangs up; CBK) by ancillary device 24 and a message to this effect is given to the service controller 15. The service controller 15 then waits for the called subscriber (B1) to answer again. This answering (the called subscriber (B1) opens: ANU) is implemented by ancillary device 24 and a message to this effect is given to the service controller 15. The service controller 15 is arranged to direct the voice frequency dialing receiver 18 (figure 1) to receive voice frequency signals from the called subscriber (B1) and to give the called subscriber (B1) message requesting the new telephone number N2, in other words the redirected subscriber's (B2) number. The called subscriber's (B1) telephone or corresponding terminal is arranged to give the redirected subscriber's (B2) number N2 to where he wants to transfer the call again. The called subscriber's (B1) telephone or corresponding terminal is arranged to give the redirected subscriber's (B2) number N2 as voice frequency dialing signals. A preset finish sign, such as #, is added to the end of the telephone number dialed. The redirected subscriber's (B2) number N2 is transmitted to the service controller 15 from tone dialing receiver 18. The service controller 15 clears the connection between the service switching and control centre 14 and the called subscriber (B1) by sending the message "CLF". This message is received in local exchange 21, whose connection to the called subscriber (B1) 4 is cleared. At the same time, using the functions shown above, the calling subscriber's (A) connection with the service switching and control centre 14 in the intelligent network 13 is maintained. Using service controller 15, the call is re-routed from service switching and control centre 14 to the redirected subscriber's (B2) 25 number N2 via local exchange 26. The redirected subscriber's (B2) telephone rings and the redirected subscriber (B2) answers; the speech path between the calling subscriber (A) and the redirected subscriber (B2) is connected via the service switching and control centre 14. The service controller 15 transfers to control status and the call between the calling subscriber (A) and the redirected subscriber (B2) is allowed to continue. When the calling subscriber (A) or the redirected subscriber (B2) hangs up. The service controller 15 clears the connection between the calling subscriber (A), the service switching and control centre 14 and the redirected subscriber (B2) 25. After this, the calling subscriber (A) is ready to dial a new number or to receive calls.

Ancillary device 24 is a device with a dialing unit and computer, which directed by a computer can transmit tone dialing signals (DTMF) to answer and clear the connection, in other words to close and open the subscriber node. Ancillary device 24 can be connected to any of the called subscriber's terminal equipment which is connected by subscriber line either direct to a local exchange (PK) or via an extension to a telephone exchange, as shown in figure 3. Ancillary device 24 is a modem expediently controlled by a computer.

Ancillary device 24, such as a computer controlled modem, can be located in the same subscriber connection with the called subscriber (B1) 4 (figure 1) or, in the case of a telephone exchange (figure 3), another extension with respect to the called subscriber's (B1) extension. Alternatively to the invention no ancillary device is used whatsoever, and the called subscriber (B1) answers the telephone and gives the redirected subscriber (B2) number N2 in the form of voice frequency dialing signals by pushing the buttons on the telephone keypad.

The invention is described above mostly by referring to one of its embodiment, it is clear, that the invention can be applied in many different ways within the scope of the inventive idea specified in the attached claims.

## Claims

1. Method to re-route a call on the basis of information given by called subscriber, which method is applied in a telecommunications network comprising an intelligent network (13), via which calling subscriber's (1) call is first routed, based on the dialled number N1, to a service switching and control centre (14), wherein the offered service is identified on the basis of the number N1, and there after the call management is assigned to service controller (15) for routing the call to a corresponding called subscriber (4), based on the information given by called subscriber (4) the call is rerouted to a subsequent subscriber, so that the following steps to re-route a call are effected by means of the service controller (15) and the call switching devices connected thereto:
- calling subscriber's (1) call is first connected to called subscriber (4), whose answer is detected, where after is waited that called subscriber's (4) telephone or a corresponding terminal is hung up;
- the hung-up of the called subscriber's (4) telephone is detected, where after is waited, that it is answered again;
- the re-answering at the called subscriber's (4) telephone is detected and via the called subscriber's (4) telephone is given a redirected subscriber's (7: 25) number N2, which is registered;
- the connection between the calling subscriber (1) and the called subscriber (4) is cleared and a new connection between the calling subscriber (1) and the redirected subscriber (7;25) is opened; ***characterized* in, that**
- hunging up, re-answering of the called subscriber's (4) line and giving of the redirected subscriber's (7;25) number N2 are effected automatically by means of an ancillary device (24) connected to the called subscriber's (4) telephone or a corresponding terminal.

2. Method according to the claim 1, ***characterized* in, that** the redirected subscriber's (7;25) number N2 is given as tone freguency dial signals, and an agreed postfix is added after the number.

3. Method according to the claim 1 or 2, ***characterized* in, that** the redirected subscriber's (7;25) number is given as an abbreviated dialing number, on the basis of which the service controller (15) is arranged to select from register adapted in a call database memory unit (16), an actual redirected subscriber's (7;25) subscriber number N2.

4. Method according to anyone of the preceding claims, ***characterized* in, that** the called subscriber's (4) telephone or corresponding terminal is arranged to an extension of a telephone exchange (20).

5. Method to re-route a call on the basis of information given by called subscriber, which method is applied in a telecommunications network, comprising an intelligent network (13), via which calling subscriber's (1) call is first routed, based on the dialled number N1, to a service switching and control centre (14), wherein the offered service is identified on the basis of the number N1, and there after the call management is assigned to service controller (15) for routing the call to a corresponding called subscriber (4), based on the information given by called subscriber (4) the call is rerouted to a subsequent subscriber, so that the following steps to re-route a call are effected by means of the service controller (15) and the call switching devices connected thereto:
- calling subscriber's (1) call is first connected to called subscriber's extension (4) in a telephone exchange (20);
- forwarding the call automatically as a preset function by a computer controlling telephone exchange (20) to another extension (29) in the telephone exchange (20), whose answer is detected, where after is waited that the another extension (29) is hung up;
- the hung-up of the another extension (29) is detected, where after is waited, that it is answered again;
- the re-answering at the another extension (29) is detected and via the another extension (29) is given a redirected subscriber's (7: 25) number N2, which is registered;
- the connection between the calling subscriber (1) and the another extension (29) is cleared and a new connection between the calling subscriber (1) and the redirected subscriber (7;25) is opened; ***characterized* in, that**
- hunging up, re-answering of the called subscriber's (4) line and giving of the redirected subscriber's (7;25) number N2 are effected automatically by means of an ancillary device (24) connected to the another extension (29).

## Patentansprüche

1. Verfahren zur Rufumleitung auf der Grundlage einer Information, welche durch den angerufenen Teilnehmer gegeben wird, wobei das Verfahren in einem Telekommunikationsnetzwerk angewendet wird, welches ein intelligentes Netzwerk (13) aufweist, über welches der Anruf des Teilnehmers (1) zuerst weitergeleitet wird, basierend auf der gewählten Nummer N1, zu einem Service-Vermittlungs- und - Steuerzentrum (14), in welchem der angebotene Service bzw. Dienst auf der Grundlage der Nummer N1 identifiziert wird und danach das Rufmanagement dem Service-Controller (15) zum Weiterleiten des Anrufes an den entsprechenden angerufenen Teilnehmer (4) zugeteilt wird, basierend auf der Information, welche durch den angerufenen Teilnehmer (4) gegeben wird, der Anruf zu einem nachfolgenden Teilnehmer umgeleitet wird, so dass die folgenden Schritte, um einen Anruf umzuleiten, mit Hilfe des Service-Controllers (15) und der Rufvermittlungseinrichtungen, welche damit verbunden sind, bewirkt werden:
- der Anruf des anrufenden Teilnehmers (1) wird zuerst mit dem gerufenen Teilnehmer (4) verbunden, dessen Antwort wird detektiert, wonach das Telefon des gerufenen Teilnehmers (4) wartet oder ein entsprechendes Endgerät aufgehängt wird;
- das Aufhängen des Telefons des angerufenen Teilnehmers (4) wird detektiert, wonach gewartet wird, bis es wieder antwortet;
- das Rückantworten bei dem angerufenen Telefon des Teilnehmers (4) wird detektiert und über das Telefon des angerufenen Teilnehmers (4) wird eine Nummer N2 des umgeleiteten Teilnehmers (7; 25) gegeben, welche registriert wird;
- die Verbindung zwischen dem anrufenden Teilnehmer (1) und dem angerufenen Teilnehmer (4) wird aufgehoben bzw. gelöscht und eine neue Verbindung zwischen dem anrufenden Teilnehmer (1) und dem umgeleiteten Teilnehmer (7; 25) wird eröffnet; **dadurch gekennzeichnet, dass**
- das Aufhängen, das Rückantworten der Leitung des angerufenen Teilnehmers (4) und der Nummer N2 des umgeleiteten Teilnehmers (7; 25) automatisch mit Hilfe einer untergeordneten Einrichtung (24) bewirkt werden, welche mit dem Telefon des Teilnehmers (4) oder einem entsprechenden Endgerät verbunden ist.

2. Verfahren nach Anspruch 1, **dadurch gekennzeichnet, dass** die Nummer N2 des umgeleiteten Teilnehmers (7; 25) über Tonfrequenz-Wählsignale gegeben wird und ein vereinbarter Postfix nach der Nummer hinzugefügt wird.

3. Verfahren nach Anspruch 1 oder 2, **dadurch gekennzeichnet, dass** die umgeleitete Nummer des Teilnehmers (7; 25) als eine abgekürzte Wählnummer auf der Basis, auf welcher der Service-Controller (15) angeordnet ist, gegeben wird, um vom Register, welches in einer Vermittlungsdatenbank-Speichereinheit (16) adaptiert ist, eine aktuelle Teilnehmernummer N2 des umgeleiteten Teilnehmers (7; 25) auszuwählen.

4. Verfahren nach einem der vorangehenden Ansprüche, **dadurch gekennzeichnet, dass** das Telefon des angerufenen Teilnehmers (4) oder ein entsprechendes Endgerät an einem Anschluss einer Telefonvermittlung (20) angeordnet ist.

5. Verfahren zum Rufumleiten auf der Grundlage einer Information, welche durch den angerufenen Teilnehmer gegeben ist, wobei das Verfahren in einem Telekommunikationsnetzwerk angewendet wird, welches ein intelligentes Netzwerk (13) aufweist, über welches der Anruf des anrufenden Teilnehmers (1) zuerst geleitet wird, basierend auf der angerufenen Nummer N1, an ein Service-Vermittlungs- und - Steuerzentrum (14), wobei der angebotene Dienst auf der Basis der Nummer N1 identifiziert wird und danach das Rufmanagement dem Service-Controller (15) zugeteilt wird, um den Anruf an einen entsprechenden angerufenen Teilnehmer (4) weiterzuleiten, wobei auf der gegebenen Information durch den angerufenen Teilnehmer (4) der Anruf an einen nachfolgenden Teilnehmer umgeleitet wird, so dass die folgenden Schritte, um einen Anruf umzuleiten, mit Hilfe des Service-Controllers (15) und der Rufvermittlungseinrichtungen, welche damit verbunden sind, bewirkt werden:
- der Anruf des anrufenden Teilnehmers (1) wird zuerst mit dem Anschluss (4) des angerufenen Teilnehmers in einer Telefonvermittlung (20) verbunden;
- automatisches Weiterleiten des Anrufs als eine vorher eingestellte Funktion durch einen Rechner, welcher die Telefonvermittlung (20) steuert, zu einem anderen Anschluss (29) in der Telefonvermittlung (20), dessen Antwort wird detektiert, wonach gewartet wird, dass der andere Anschluss (29) aufhängt;
- das Aufhängen des anderen Anschlusses (29) wird detektiert, wonach gewartet wird, dass dieser wieder antwortet;
- das Rückantworten bei dem anderen Anschluss (29) wird detektiert, und über einen anderen Anschluss (29) wird eine Nummer N2 des umgeleiteten Teilnehmers (7; 25) gegeben, welche registriert wird;
- die Verbindung zwischen dem anrufenden Teilnehmer (1) und dem anderen Anschluss (29) wird aufgehoben, und eine neue Verbindung zwischen dem anrufenden Teilnehmer (1) und dem umgeleiteten Teilnehmer (7; 25) wird eröffnet; **dadurch gekennzeichnet, dass**
- das Aufhängen, das Rückantworten der Leitung des angerufenen Teilnehmers (4) und das Geben der Nummer N2 des umgeleiteten Teilnehmers (7; 25) automatisch mit Hilfe einer untergeordneten Einrichtung (24) bewirkt werden, welche mit dem anderen Anschluss (29) verbunden ist.

## Revendications

1. Procédé de réacheminement d'une communication sur la base d'informations données par un abonné appelé, le procédé, qui est appliqué dans un réseau de télécommunications, comprenant un réseau intelligent (13), par le biais duquel la communication d'un abonné appelant (1) est acheminée tout d'abord, sur la base du numéro composé N1, vers un centre de commutation et de gestion de services (14), dans lequel le service proposé est identifié sur la base du numéro N1, et à la suite de quoi la gestion des appels est attribuée à un gestionnaire de services (15) pour acheminer la communication vers un abonné appelé correspondant (4), sur la base des informations données par l'abonné appelé (4) la communication est réacheminée vers un abonné suivant, de sorte que les étapes suivantes consistant à réacheminer une communication sont accomplies au moyen du gestionnaire de services (15) et des dispositifs de commutation d'appels qui sont connectés à lui :
- la communication de l'abonné appelant (1) est connectée tout d'abord à l'abonné appelé (4), dont la réponse est détectée, à la suite de quoi il est attendu qu'un téléphone ou un terminal correspondant de l'abonné appelé (4) soit raccroché ;
- le raccrochage du téléphone de l'abonné appelé (4) est détecté, à la suite de quoi il est attendu qu'il y soit répondu à nouveau ;
- la nouvelle réponse au niveau du téléphone de l'abonné appelé (4) est détectée et, par le biais du téléphone de l'abonné appelé (4), il est donné un numéro N2 d'abonné redirigé (7 ; 25), qui est enregistré ;
- la connexion entre l'abonné appelant (1) et l'abonné appelé (4) est arrêtée et une nouvelle connexion entre l'abonné appelant (1) et l'abonné redirigé (7 ; 25) est ouverte ; le procédé étant **caractérisé en ce que** :
- le raccrochage, la nouvelle réponse de la ligne de l'abonné appelé (4) et la fourniture du numéro N2 de l'abonné redirigé (7 ; 25), sont accomplis automatiquement au moyen d'un dispositif auxiliaire (24) qui est connecté au téléphone de l'abonné appelé (4) ou à un terminal correspondant.

2. Procédé selon la revendication 1, **caractérisé en ce que** le numéro N2 de l'abonné redirigé (7 ; 25) est donné sous la forme de signaux de numérotation à tonalité, et un suffixe convenu est ajouté après le numéro.

3. Procédé selon la revendication 1 ou 2, **caractérisé en ce que** le numéro de l'abonné redirigé (7 ; 25) est donné sous la forme d'un numéro à composer abrégé, sur la base duquel le gestionnaire de services (15) est disposé de façon à sélectionner, à partir d'un registre adapté dans une unité de mémoire de base de données d'appels (16), un numéro d'abonné N2 d'un abonné redirigé actuel (7 ; 25).

4. Procédé selon l'une quelconque des revendications précédentes, **caractérisé en ce que** le téléphone ou un terminal correspondant de l'abonné appelé (4), est disposé par rapport à un poste d'un central téléphonique (20).

5. Procédé de réacheminement d'une communication sur la base d'informations données par un abonné appelé, le procédé qui est appliqué dans un réseau de télécommunications, comprenant un réseau intelligent (13), par le biais duquel la communication d'un abonné appelant (1) est acheminée tout d'abord, sur la base du numéro composé N1, vers un centre de commutation et de gestion de services (14), dans lequel le service proposé est identifié sur la base du numéro N1, et à la suite de quoi la gestion des appels est attribuée à un gestionnaire de services (15) pour acheminer la communication vers un abonné appelé (4) correspondant, sur la base des informations données par l'abonné appelé (4) la communication est réacheminée vers un abonné suivant, de sorte que les étapes suivantes consistant à réacheminer une communication sont accomplies au moyen du gestionnaire de services (15) et des dispositifs de commutation d'appels qui sont connectés à lui :
- la communication de l'abonné appelant (1) est connectée tout d'abord à un poste d'abonné appelé (4) dans un central téléphonique (20) ;
- la communication est renvoyée automatiquement en tant qu'une fonction prédéterminée par un ordinateur gérant le central téléphonique (20) vers un autre poste (29) du central téléphonique (20), dont la réponse est détectée, à la suite de quoi il est attendu que l'autre poste (29) soit raccroché ;
- le raccrochage de l'autre poste (29) est détecté, à la suite de quoi il est attendu qu'il y soit répondu à nouveau ;
- la nouvelle réponse au niveau de l'autre poste (29) est détectée et, par le biais de l'autre poste (29), il est donné un numéro N2 d'abonné redirigé (7 ; 25), qui est enregistré ;
- la connexion entre l'abonné appelant (1) et l'autre poste (29) est arrêtée et une nouvelle connexion entre l'abonné appelant (1) et l'abonné redirigé (7 ; 25) est ouverte ; le procédé étant **caractérisé en ce que** :
- le raccrochage, la nouvelle réponse de la ligne de l'abonné appelé (4) et la fourniture du numéro N2 de l'abonné redirigé (7 ; 25), sont accomplis automatiquement au moyen d'un dispositif auxiliaire (24) qui est connecté à l'autre poste (29).
